(19) **Europäisches Patentamt / European Patent Office / Office européen des brevets**

(11) **EP 4 564 292 A1**

(12) **EUROPEAN PATENT APPLICATION**

(43) Date of publication:
04.06.2025 Bulletin 2025/23

(21) Application number: 23212685.4

(22) Date of filing: 28.11.2023

(51) International Patent Classification (IPC):
$G06T\ 7/70^{(2017.01)}$    $G06T\ 7/593^{(2017.01)}$
$G06T\ 7/73^{(2017.01)}$    $G06T\ 17/00^{(2006.01)}$
$G06F\ 18/211^{(2023.01)}$    $G06T\ 13/40^{(2011.01)}$

(52) Cooperative Patent Classification (CPC):
G06T 7/593; G06T 7/55; G06V 10/426;
G06V 10/462; G06V 10/757; G06V 20/647;
G06T 2207/30196

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: Koninklijke Philips N.V.
5656 AG Eindhoven (NL)

(72) Inventor: VAREKAMP, Christiaan
5656 AG Eindhoven (NL)

(74) Representative: Philips Intellectual Property &
Standards
High Tech Campus 52
5656 AG Eindhoven (NL)

(54) **METHOD AND SYSTEM FOR 3D KEY POINT RECONSTRUCTION**

(57) A method and system for reconstructing 3D key points. A plurality of 2D images, each providing a different view of a scene, are obtained and processed to detect 2D key points for one or more object instances. The detected 2D key points are processed to determine one or more measures of occlusion for each instance, and only 2D key points belonging to instances for which all of the one or more measures of occlusion satisfy one or more respective predetermined conditions are used to estimate a plurality of 3D key points for the scene.

700

FIG. 7

**Description**

FIELD OF THE INVENTION

The invention relates to the field of 3D imaging, and in particular to 3D key point reconstruction.

BACKGROUND OF THE INVENTION

Key point detection is commonly used to detect semantically meaningful points on an object. For instance, in an image of people, key points corresponding to facial features and joints of each person in the image may be detected. Key point detection may be used for 3D object pose estimation. Various approaches to 3D pose estimation exist: for example, using a single image, using a color and depth camera, or using multiple input camera views.

3D object pose estimation techniques based on multiple input camera views rely on reconstructing 3D key points by determining correspondences between 2D key points in different views.

One source of inaccuracy in 3D pose estimation based on multiple input camera views is due to inaccuracy in the positions of the 2D key points detected in the input camera views. Inaccurate key point detection in a 2D camera view generally occurs when an object (or part of an object) is occluded in the camera view. The use of inaccurate 2D key points in 3D key point reconstruction results in the key points being mapped to an incorrect position in 3D space.

Another problem with the 3D reconstruction of 2D key points from multiple input camera views lies in the difficulty in identifying corresponding key points over different camera views, especially views from very different camera positions. Existing correspondence estimation methods (such as the Scale Invariant Feature Transform) generally use local color texture properties; however, object key points are abstract features that do not necessarily correspond with visible texture variations. Conventional matching techniques alone cannot therefore be used to identify corresponding key points.

SUMMARY OF THE INVENTION

The invention is defined by the claims.

According to examples in accordance with an aspect of the invention, there is provided a method for 3D key point reconstruction, the method comprising: obtaining a plurality of 2D images of a scene, each 2D image having been acquired by a different camera; detecting, in each 2D image, a plurality of 2D key points for each instance of one or more objects in the scene; processing the detected 2D key points to determine at least one measure of occlusion for each instance in each image; and processing a subset of the detected 2D key points to estimate a plurality of 3D key points for the scene, wherein the subset of detected 2D key points excludes 2D key points belonging to an instance for which any determined measure of occlusion fails to satisfy at least one predetermined condition for the respective measure of occlusion.

In other words, entire instances that are sufficiently occluded are excluded from the 3D key point reconstruction (rather than just excluding occluded 2D key points). The inventors have recognized that any 2D key points belonging to an occluded object instance are more likely to be detected inaccurately than 2D key points belonging to an object instance that is not occluded, and therefore that using any of these 2D key points in estimating the 3D key points would increase a likelihood of error in the 3D key points.

In some examples, the at least one measure of occlusion for each instance in each image includes a measure of frustum occlusion. Frustum occlusion occurs when an object instance is only partly contained in the field-of-view of the camera.

In some examples, determining the measure of frustum occlusion for each instance in each image comprises: processing the detected 2D key points belonging to the instance to determine a shape representation for the instance; and determining the measure of frustum occlusion for the instance based on the shape representation for the instance.

The shape representation for an instance may, for example, be a circle representation having a center corresponding to an average position of the 2D key points for the instance, and a radius equal to the average deviation of the 2D key points from the center of the circle representation. Alternative shape representations include bounding boxes, convex hulls and polygons constructed from a predefined subset of 2D key points.

In some examples, the at least one measure of occlusion for each instance in each image includes, for each other instance in the same image, a measure of mutual instance occlusion between the instance and the other instance. Mutual instance occlusion occurs when different instances of objects occlude each other in an image.

In some examples, determining each measure of mutual instance occlusion between the instance and another instance comprises: processing the detected 2D key points belonging to the instance to determine a shape representation for the instance; processing the detected 2D key points belonging to the other instance to determine a shape representation for the other instance; and determining the measure of mutual instance occlusion between the instance and the other instance based on the shape representation for the image and the shape representation for the other instance.

For instance, the shape representations may be circle representations, and the measure of mutual instance occlusion may be a ratio of the distance between the centers of the circle representations to the sum of the radii of the circle representations. Alternative shape representations include bounding boxes, convex hulls and polygons constructed from a predefined subset of 2D key points.

In some examples, the at least one measure of occlusion for each instance in each image includes at least one measure of mutual instance key point occlusion. Mutual instance key point occlusion occurs when key points of a same or similar type belonging to different instances lie close to each other in image space.

The use of a measure of mutual instance key point occlusion allows the identification of instances which are not sufficiently overlapping to detect occlusion using the measure of mutual instance occlusion.

In some examples, the at least one measure of mutual instance key point occlusion for each instance in each image comprises a measure of distance between 2D key points for at least one first predefined pair, wherein each first predefined pair comprises a 2D key point of the instance and a 2D key point of another instance in the image.

In some examples, in response to the at least one predetermined condition for the at least one mutual instance key point occlusion for an instance being satisfied, the subset of detected 2D key points excludes any 2D key point belonging to the instance for which the measure of distance for a first predefined pair containing the 2D key point fails to exceed a predetermined key point threshold.

In other words, if the mutual instance key point occlusion is not sufficient to exclude the entire instance from the 3D key point estimation, particular 2D key points with a high likelihood of being confused with a 2D key point of a same or similar type may nonetheless be excluded from the 3D key point estimation.

In some examples, the at least one measure of occlusion for each instance in each image includes at least one measure of self-occlusion. Self-occlusion occurs when key points of a same or similar type belonging to a same instance lie close to each other in space (i.e. when one part of an instance occludes another part of the same instance).

In some examples, the at least one measure of self-occlusion for each instance in each image comprises a measure of distance between 2D key points for at least one second predefined pair, wherein each second predefined pair comprises a pair of 2D key points of the instance.

For example, if the instance is an instance of a human, a measure of distance may be determined for each pair of left and right body part key points (e.g. left shoulder and right shoulder, left elbow and right elbow, lift wrist and right wrist, etc.).

In some examples, the step of processing the subset of the detected 2D key points to estimate the plurality of 3D key points comprises: for each instance included in the subset of detected 2D key points: generating, in each of one or more other images, an epipolar line for each 2D key point belonging to the instance; identifying, as a corresponding instance in each of the one or more other images, an instance for which the 2D key points have a shortest average distance to the epipolar lines; and for at least one corresponding instance, defining pairs of matching 2D key points between the 2D key points of the instance and the 2D key points of the corresponding instance; and processing the pairs of matching 2D key points to estimate the plurality of 3D key points.

In other words, 2D key points are matched by identifying corresponding instances and matching key points between the corresponding instances. This improves an accuracy of the matching process.

Identifying a corresponding instance based on the average distance to epipolar lines for an instance in a different image may provide a more robust identification of corresponding instances based on visible texture variations, particularly between images having a large difference in view position. An epipolar line for a key point is a line of intersection between the image plane (in which the epipolar line is generated) and the epipolar plane (i.e. a plane in which the key point and the centers of the cameras that acquired the image containing the key point and the image in which the epipolar line is generated).

In some examples, pairs of matching 2D key points are defined only for corresponding instances for which the average distance to the epipolar lines fails to exceed a predetermined average distance threshold.

In this way, corresponding instances that have a high likelihood of being incorrectly matched are excluded from the 3D key point estimation, thus improving an accuracy of the estimated 3D key points.

In some examples, the step of processing the pairs of matching 2D key points to estimate the plurality of 3D key points comprises, for each 3D key point: processing each pair of matching 2D key points corresponding to the 3D key point to obtain an initial estimate of the position of the 3D key point; and processing the initial estimates of the position of the 3D key point to determine a final estimate of the position of the 3D key point.

For instance, the final estimate of the position for each 3D key point may have the median x-, y- and z-coordinates of the initial estimates. This reduces an effect of outliers (e.g. due to incorrectly-identified instance correspondences) on the final position of the 3D key point.

There is also proposed a computer program product comprising computer program code means which, when executed on a computing device having a processing system, cause the processing system to perform all of the steps of the method described above.

According to another aspect of the invention, there is provided a processing system for 3D key point reconstruction, the processing system being configured to: obtain a plurality of 2D images of a scene, each 2D image having been acquired by a different camera; detect, in each 2D image, a plurality of 2D key points for each instance of one or more objects in the scene; process the detected 2D key points to determine at least one measure of occlusion for each instance in each image; and process a subset of the detected 2D key points to estimate a plurality of 3D key points for the scene, wherein the subset of detected 2D key points excludes 2D key points belonging to an instance for which any determined measure of occlusion fails to satisfy at least one predetermined condition for the respective measure of occlusion.

These and other aspects of the invention will be apparent from and elucidated with reference to the embodiment(s) described hereinafter.

BRIEF DESCRIPTION OF THE DRAWINGS

For a better understanding of the invention, and to show more clearly how it may be carried into effect, reference will now be made, by way of example only, to the accompanying drawings, in which:

Fig. 1 illustrates a 3D imaging system 100, according to an embodiment of the invention;
Fig. 2 illustrates an example of key point detection in a 2D image;
Fig. 3 illustrates the 2D image of Fig. 2, with a circle representation for each instance in the image superimposed on the image;
Fig. 4 illustrates a 2D image of a different view of the scene shown in the 2D image of Fig. 2, with a circle representation for each instance in the image superimposed on the image;
Fig. 5 illustrates a 2D image of another different view of the scene shown in the 2D image of Fig. 2, with a circle representation for each instance in the image superimposed on the image;
Fig. 6 illustrates the 2D image of Fig. 2, with epipolar lines for an instance in the 2D image of Fig. 5 generated in the instance; and
Fig. 7 illustrates a method for 3D key point reconstruction, according to an embodiment of the invention.

DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a method and system for reconstructing 3D key points. A plurality of 2D images, each providing a different view of a scene, are obtained and processed to detect 2D key points for one or more object instances. The detected 2D key points are processed to determine one or more measures of occlusion for each instance, and only 2D key points belonging to instances for which all of the one or more measures of occlusion satisfy one or more respective predetermined conditions are used to estimate a plurality of 3D key points for the scene.

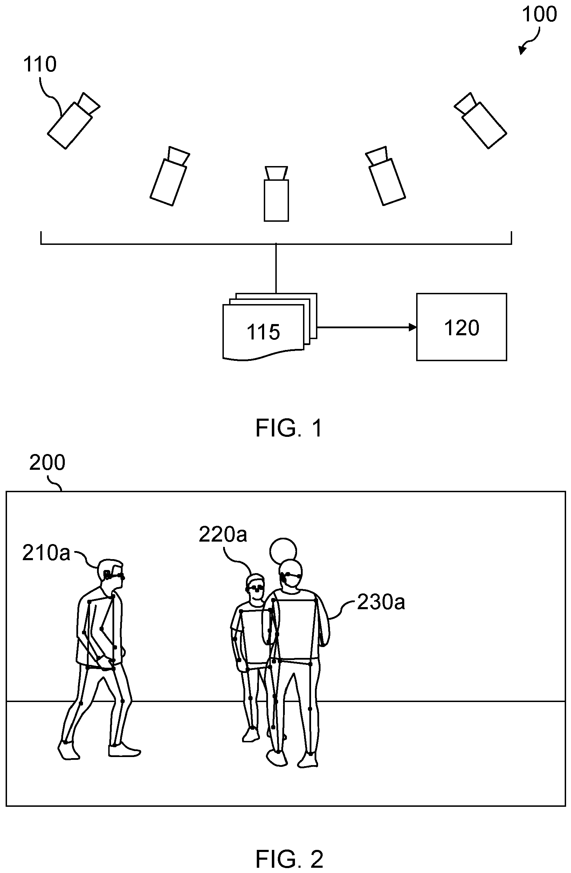

Fig. 1 illustrates a 3D imaging system 100, according to an embodiment of the invention. The 3D imaging system comprises a plurality of cameras 110 and a processing system 120. The processing system 120 is, itself, an embodiment of the invention.

The plurality of cameras 110 are positioned with respect to a scene, such that each camera is able to acquire an image of a different view of the scene (i.e. each camera has a different position and/or orientation to each other camera). In Fig. 1, each camera has a different angle with respect to the other cameras (i.e. each camera has a different orientation as well as a different position); however, in some examples, one or more of the cameras may have a same orientation as at least one other camera. Fig. 1 shows five cameras; however the skilled person will appreciate that other numbers of cameras may be used in the 3D imaging system 100. For example, the plurality of cameras may comprise at least three cameras. In some examples, larger numbers of cameras may be used; for instance, 8 cameras, 16 cameras or more (e.g. 50 cameras).

The processing system 120 is configured to obtain a plurality of 2D images 115 of a scene, each acquired by a different camera 110. For illustrative purposes, Fig. 1 shows the processing system directly obtaining the plurality of 2D images from the plurality of cameras; however, as the skilled person will readily appreciate, the processing system may obtain the 2D images acquired by the plurality of cameras from another source storing the 2D images (e.g. from a memory unit).

Each of the 2D images 115 captures a different view of the scene. In some examples, each image may have been acquired by a camera at the same time, such that each image captures a view of the scene at a single point in time. The use of simultaneously-acquired images may reduced a complexity and likelihood of error in the 3D key point reconstruction process. However, it is not necessary that the 2D images are acquired at the same time; in some examples, the 2D images may have been acquired at different times, and any suitable technique may be used to compensate for temporal differences between images, such as techniques that use audio signals (in examples where the cameras each acquire an audio signal) and/or techniques based on the correlation of motion trajectories of one or more features between views over time.

The processing system 120 is configured to detect, in each 2D image, a plurality of 2D key points for each instance of one or more objects in the scene. Each 2D key point for an instance identifies an estimated position of a predefined (semantically meaningful) part of the instance within the 2D image. For instance, in the case of an instance of a human in the 2D image, the 2D key points may identify the estimated positions of particular anatomical landmarks (such as joints and facial features). However, the skilled person will appreciate that the 2D key point detection is not limited to detecting 2D key points for instances of humans, and that 2D key points may be detected for any kind of object. For instance, 2D key points may be detected for vehicles (e.g. cars and other road vehicles).

Methods for detecting 2D key points in a 2D image are well known, and suitable techniques for detecting 2D key points will be apparent to the skilled person.

Fig. 2 illustrates an example of key point detection in a 2D image 200. The 2D image 200 contains three instances of people 210a, 220a and 230a. For each instance, 17 key points have been detected, each identifying an estimated position of a different anatomical landmark: a left eye, a right eye, a nose, a left ear, a right ear, a left shoulder, a right shoulder, a left elbow, a right elbow, a left wrist, a right wrist, a left hip, a right hip, a left knee, a right knee, a left ankle, and a right ankle.

Returning to Fig. 1, the processing system 120 is configured to process the detected 2D key points to determine at least one measure of occlusion for each instance in each 2D image. The processing system is then configured to process a subset of the detected 2D key points to estimate a plurality of 3D key points for the scene. The subset of detected 2D key points excludes 2D key points belonging to an instance for which any determined measure of occlusion fails to satisfy one or more predetermined conditions for the respective measure of occlusion.

In other words, for an instance having a measure of occlusion that does not satisfy at least one predetermined condition, none of the 2D key points belonging to the instance are used in the 3D key point estimation. Various measures of occlusion are envisaged; for instance, the at least one measure of occlusion may comprise one or more of: a measure of frustum occlusion, a measure of mutual instance occlusion, at least one measure of mutual instance key point occlusion, and/or at least one measure of self-occlusion.

In some examples, the at least one measure of occlusion for each instance in each image includes a measure of frustum occlusion. Frustum occlusion occurs when part of an instance in an image falls outside the field-of-view of the camera that acquired the image (i.e. when an instance is not fully contained in the image).

A measure of frustum occlusion may be determined for each instance in each image by processing the detected 2D key points belonging to the instance to determine a shape representation of the instance, and determining the measure of frustum occlusion based on the shape representation. For instance, the measure of frustum occlusion may be a measure of an amount of the shape representation that falls outside the image field-of-view, or a measure of a shortest distance between the shape representation and an edge of the image. The one or more predetermined conditions for the measure of frustum occlusion, used to determine whether the 2D key points belonging to the instance are used in the 3D key point estimation, may comprise a threshold for the measure of frustum occlusion.

In some examples, the shape representation for each instance may be a circle representation. The circle representation for each instance may, for example, have a center positioned at an average position of the 2D key points for the instance. In other words, the position of the center of the circle, $x_{circle} \equiv (x_{circle}, y_{circle})$, may be determined as:

$$\mathbf{x}_{circle} \equiv \frac{\sum_{k=1}^{N} \mathbf{x}_k}{N} \qquad (1)$$

where N is the total number of 2D key points belonging to the instance.

The radius R of the circle representation for each instance may be set as the average deviation from the center of the circle representation:

$$R \equiv \frac{\sum_{k=1}^{N} |\mathbf{x}_k - \mathbf{x}_{circle}|}{N} \qquad (2)$$

A measure of frustum occlusion determined based on such a circle representation may, for example, be a measure of the amount of the circle representation that falls outside the image field-of-view. The one or more predetermined conditions for the measure of frustum occlusion may then comprise a threshold on the amount of the circle representation that falls outside the image field-of-view. For instance, a threshold of zero may be used for the measure of frustum occlusion, such that an instance is excluded from the 3D key point estimation in response to any amount of the circle representation falling outside the image field-of-view.

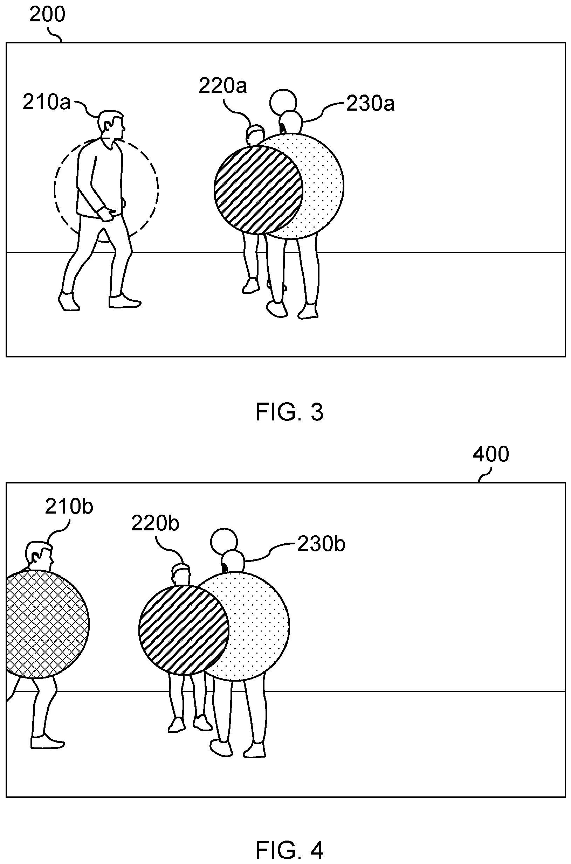

Fig. 3 illustrates the 2D image 200 of Fig. 2, with circle representations for each instance 210a, 220a, 230a superimposed on the image. The size and position of each circle representation have been determined using Equations 1 and 2. Each circle representation in the 2D image 200 is entirely contained within the image 200, so the predetermined condition(s) for the measure of frustum occlusion may be considered to be satisfied for all instances in the 2D image 200.

Fig. 4 illustrates another 2D image 400, which captures the scene shown in the 2D image 200 from a different view. Circle representations for the person instances 210b, 220b and 230b (respectively corresponding to the instances 210a, 220a and 230a in the 2D image 200) are superimposed on the image. Again, the size and position of each circle representation have been determined using Equations 1 and 2.

In the 2D image 400, the circle representation for the instance 210b is partly outside the image 400. Therefore, the measure of frustum occlusion for the instance 210b fails to satisfy the respective predetermined condition(s), and 2D key points belonging to the instance 210b will be excluded from the 3D key point estimation.

As the skilled person will readily appreciate, the determination of a measure of frustum occlusion is not limited to measures based on a circle representation for an instance, and alternative measures of frustum occlusion will be apparent to the skilled person. For example, the measure of frustum occlusion may be determined based on a different type of shape representation. For instance, a bounding box containing the 2D key points of an instance may be determined, and the measure of frustum occlusion for the instance may be determined based on the bounding box (e.g. the measure of frustum occlusion may be a measure of a shortest distance between the bounding box and an edge of the image containing the instance). Alternatively, the measure of frustum occlusion for an instance may be determined based on a convex hull of the 2D key points belonging to the instance, or based on a polygon constructed from a predefined subset of the 2D key points belonging to the instance.

The at least one measure of occlusion for each instance in each image may additionally or alternatively include, for each other instance in the same image, a measure of mutual instance occlusion between the instance and the other instance. Mutual instance occlusion occurs when different instances of objects in an image occlude each other (i.e. at least part of one instance occupies the same position in the image as at least a part of another instance).

A measure of mutual instance occlusion between each instance and another instance in the same image may be determined by processing the detected 2D key points belonging to the instance to determine a shape representation for the instance, processing the 2D key points belonging to the other instance to determine a shape representation for the other instance, and determining the measure of mutual instance occlusion between the instance and the other instance based on the shape representation for the image and the shape representation for the other instance.

For instance, the measure of mutual instance occlusion between the instance and the other instance may be a measure of an amount by which the shape representation for the instance overlaps with the shape representation for the other instance, or a measure of a shortest distance between the shape representation for the instance and the shape representation for the other instance. The one or more determined conditions for the measure of mutual instance occlusion between the instance and the other instance, used to determine whether the 2D key points belonging to the instance are used in the 3D key point estimation, may comprise a threshold for the measure of mutual instance occlusion between the instance and the other instance.

In some examples, the shape representations for the instance and the other instance may each be a circle representation. The center position and radius of each circle representation may, for example, be determined using Equations 1 and 2, as described above with reference to the measure of frustum occlusion. A measure of mutual instance occlusion based on the circle representations for the instance and the other instance may, for instance, be a measure of an amount of overlap between the circle representations. The one or more predetermined conditions for the measure of mutual instance occlusion may then comprise a threshold on the amount of overlap between the instance and the other instance.

For instance, the measure of mutual occlusion between each instance and another instance may be a ratio of the distance between the centers of the circle representations for the instances to the sum of the radii of the circle representations. In other words, the predetermined condition for the measure of mutual instance occlusion between instances i and j may be expressed as:

$$\frac{\left| \mathbf{x}_{circle}^{(i)} - \mathbf{x}_{circle}^{(j)} \right|}{R_i + R_j} > T_{instance\ occlusion} \qquad (3)$$

Where $T_{instance\ occlusion}$ is the threshold that must be exceeded in order for the predetermined condition to be satisfied (i.e. in order for the instances i and j not to be excluded from the 3D key point estimation on the basis of mutual instance occlusion between the instances i and j). For instance, $T_{instance\ occlusion}$ may have a value between 0.25 and 1.25 (e.g.

$T_{\text{instance occlusion}}$ may have a value of 0.5).

In Fig. 3, the circle representations for instances 220a and 230a overlap one another, while instance 210a does not overlap with any other instance. At a threshold of $T_{\text{instance occlusion}} = 0.5$, instances 220a and 230a would fail to satisfy the predetermined condition for mutual instance occlusion, and so would be excluded from the 3D key point representation.

Similarly in Fig. 4, the circle representations for instances 220b and 230b overlap one another, while instance 210b does not overlap with any other instance. At a threshold of $T_{\text{instance occlusion}} = 0.5$, instances 220b and 230b would fail to satisfy the predetermined condition for mutual instance occlusion, and so would be excluded from the 3D key point representation.

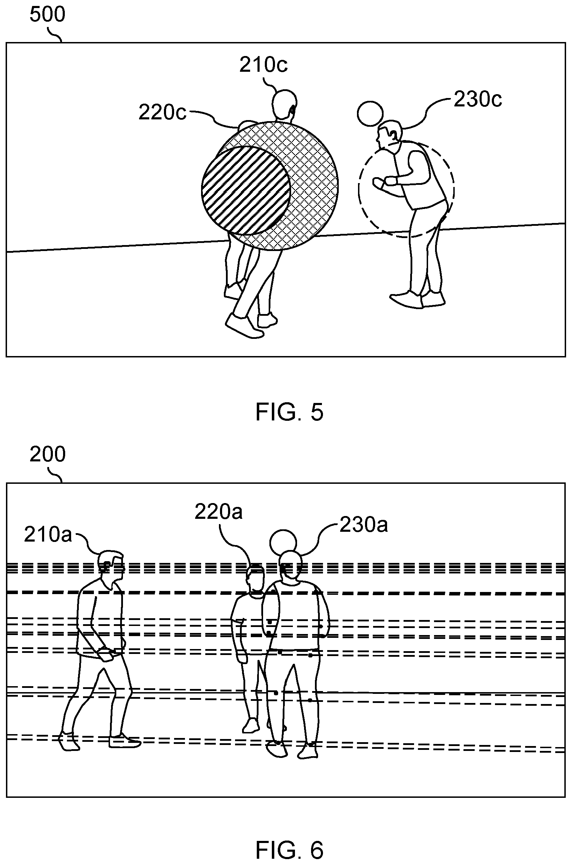

Fig. 5 illustrates another 2D image 500, which captures the scene shown in the 2D images 200 and 400 from another different view (i.e. a view different to the views of both image 200 and image 400). Circle representations for the person instances 210c, 220c and 230c (respectively corresponding to the instances 210a, 220a and 230a in the 2D image 200) are superimposed on the image. In Fig. 5, instances 210c and 220c overlap one another, while instance 230c does not overlap with any other instance. At a threshold of $T_{\text{instance occlusion}} = 0.5$, instances 210c and 220c would fail to satisfy the predetermined condition for mutual instance occlusion, and so would be excluded from the 3D key point representation.

To summarize, if the at least one measure of occlusion for each instance includes a measure of frustum occlusion and a measure of mutual instance occlusion between the instance and each other instance in the same image, each measure determined based on circle representations, the subset of detected 2D key points used to estimate a plurality of 3D key points for the scene shown in the 2D images 200, 400 and 500 would exclude the 2D key points belonging to instance 210b, due to frustum occlusion, and the 2D key points belonging to instances 220a, 230a, 220b, 230b, 210c and 220c, due to mutual instance occlusion. Assuming they were not excluded for some other reason (e.g. due to any other measure of occlusion applied), 2D key points belonging to instances 210a and 230c would be included in the subset of 2D key points used to estimate the plurality of 3D key points for the scene. In other words, the filled-in circles in Figs. 3 to 5 are circle representations for instances for which the 2D key points are not used in the 3D key point estimation, while the unfilled, dashed-line circles are circle representations for instances for which the 2D key points may be used in the 3D key point estimation.

As with the measure of frustum occlusion, alternatives to the use of circle representations may be used to determine each measure of mutual instance occlusion between an instance and another instance in the same image. In particular, the measure(s) of mutual instance occlusion may be determined based on other shape representations, such as bounding boxes, convex hulls or polygons constructed from a predefined subset of 2D key points.

The at least one measure of occlusion for each instance in each image may additionally or alternatively include at least one measure of mutual instance key point occlusion. Mutual instance key point occlusion occurs when key points belonging to different instances that have a same or similar semantic meaning occupy positions in the image that are close to one another.

The at least one measure of mutual instance key point occlusion for an instance may comprise a measure of mutual instance key point occlusion for each of one or more first predefined pairs of 2D key points. Each first predefined pair comprises a 2D key point belonging to the instance and a 2D key point of another instance in the same image.

The one or more first predefined pairs may be defined as pairs of 2D key points having a high likelihood of confusion in 2D key point detection if the 2D key points are close to one another. For instance, the one or more first predefined pairs may include each 2D key point of the instance paired with a 2D key point of the other instance having the same semantic meaning, e.g. for the example of the 2D image 200, the one or more first predefined pairs may include the following pairs: the left shoulder of the instance and the left shoulder of the other instance; the left elbow of the instance and the left elbow of the other instance; the left wrist of the instance and the left wrist of the other instance; and so on. The one or more first predefined pairs may also include pairs of 2D key points having similar semantic meanings. For example, in the case of instances of people, the one or more first predefined pairs may include a "left version" of an anatomical landmark for one instance paired with a "right version" of the same type of anatomical landmark for the other instance, and vice versa, e.g. for the example of the 2D image 200, the one or more first predefined pairs may include the following pairs: the left shoulder of the instance and the right shoulder of the other instance; the left elbow of the instance and the right elbow; the left wrist of the instance and the right wrist of the other instance; and so on.

The measure of mutual instance key point occlusion for each first predefined pair may be a measure of distance between the 2D key points of the first predefined pair. In some examples, the measure of distance may be defined relative to the sizes of the instance and the other instance (i.e. for the instances to which the 2D key points of the first predefined pair belong). For instance, the measure of distance may be defined relative to the radii of circle representations for the instance i and the other instance j, e.g. relative to an average of the radii of the circle representations:

$$\text{measure of distance} = \frac{\left| \mathbf{x}_k^{(i)} - \mathbf{x}_k^{(j)} \right|}{\left( \frac{R_i + R_j}{2} \right)} \quad (4)$$

where $\mathbf{x}_k^{(i)}$ and $\mathbf{x}_k^{(j)}$ are the positions of the 2D key points k of a first predefined pair.

The one or more predetermined conditions for the measure(s) of mutual instance key point occlusion between instances i and j may comprise a condition that the number of first predefined pairs for which the measure of mutual instance key point occlusion exceeds a predetermined key point threshold is greater than a predefined minimum number of first predefined pairs. In other words, if too few predefined pairs have 2D key points that are far enough from each other to exceed the predetermined key point threshold, all 2D key points belonging to the instance may be excluded from the 3D key point estimation. As the skilled person will appreciate, the predefined minimum number of first predefined pairs will depend on the total number of first predefined pairs (and optionally on the type of object to which the instances belong). For instance, the predefined minimum number may be defined such that all 2D key points of the instance are excluded from the 3D key point estimation if more than one of the first predefined pairs has a measure of mutual instance key point occlusion that fails to exceed the predetermined key point threshold.

The one or more predetermined conditions for the measure(s) of mutual instance key point occlusion between instances *i* and *j* may additionally or alternatively comprise a condition that the measure of mutual instance key point occlusion exceeds a predetermined key point threshold for all first predefined pairs in a subset of first predefined pairs. In other words, if the measure of mutual instance key point occlusion fails to exceed the predetermined key point threshold for any first predefined pair in the subset, all 2D key points belonging to the instance may be excluded from the 3D key point estimation. As the skilled person will appreciate, a suitable subset of first predefined pairs will depend on the type of object to which the instances belong, and on the types of 2D key points detected. For instance, for the example of the 2D images 200, 400 and 500, the subset of first predefined pairs may consist of all first predefined pairs having shoulder key points and all first predefined pairs having wrist key points, i.e. {(left shoulder, right shoulder), (left shoulder, left shoulder), (right shoulder, left shoulder), (right shoulder, right shoulder) (left wrist, right wrist), (left wrist, left wrist), (right wrist, left wrist), (right wrist, right wrist)}.

Either or both of these conditions may result in situations in which the one or more predetermined conditions are satisfied for an instance, but one or more first predefined pairs have a measure of mutual instance key point occlusion that fails to exceed the predetermined key point threshold. In such a case, any 2D key point of the instance belonging to a first predefined pair for which the measure of mutual instance key point occlusion does not exceed the predetermined key point threshold may be excluded from the subset of detected 2D key points used for 3D key point estimation. The other 2D key points of the instance (i.e. those belonging to a first predefined pair for which the measure of mutual instance key point occlusion exceeds the predetermined key point threshold) may be included in the subset, providing that the one or more predetermined conditions for any other measure of occlusion for the instance are satisfied.

Suitable values for the predetermined key point threshold will depend on how the measure of mutual instance key point occlusion is determined. For instance, if a measure of distance as defined in Equation 4 is used, the predetermined key point threshold may have a value between 0.005 and 0.1, e.g. a value of 0.01.

The at least one measure of occlusion for each instance in each image may additionally or alternatively include at least one measure of self-occlusion. Self-occlusion occurs when key points belonging to the same instance that have a similar semantic meaning occupy positions in the image that are close to one another.

The at least one measure of self-occlusion for an instance may comprise a measure of self-occlusion for each of one or more second predefined pairs of 2D key points. Each second predefined pair comprises two 2D key points of the instance.

The one or more second predefined pairs may be defined as pairs of 2D key points having a high likelihood of confusion in 2D key point detection if the 2D key points are close to one another. For instance, in the case of an instance of a person, the one or more second predefined pairs may include a "left version" of an anatomical landmark for the instance paired with a "right version" of the same type of anatomical landmark for the instance, e.g. for the example of the 2D image 200, the one or more second predefined pairs may include the following pairs: the left shoulder and right shoulder of the instance; the left elbow and right elbow of the instance; the left wrist and right wrist of the instance; and so on.

The measure of self-occlusion for each second predefined pair may be a measure of distance between the 2D key points of the second predefined pair. In some examples, the measure of distance may be defined relative to the size of the instance to which the 2D key points of the second predefined pair belong. For instance, the measure of distance may be defined relative to the radius of a circle representation for the instance:

$$\text{measure of distance} = \frac{\left| \mathbf{x}_k^{(i)} - \mathbf{x}_l^{(i)} \right|}{R_i} \tag{5}$$

where $\mathbf{x}_k^{(i)}$ and $\mathbf{x}_l^{(i)}$ are the positions of the 2D key points of a second predefined pair for instance i.

In some examples, the one or more predetermined conditions for the measure(s) of self-occlusion for an instance may comprise a condition that the measure of self-occlusion for each second predefined pair exceeds a predetermined self-occlusion threshold. In other words, all 2D key points belonging to an instance may be excluded from the 3D key point estimation if any second predefined pair has a measure of self-occlusion that fails to exceed the predetermined self-occlusion threshold.

Suitable values for the predetermined self-occlusion threshold will depend on how the measure of self-occlusion is determined. For instance, if a measure of distance as defined in Equation 5 is used, the predetermined self-occlusion threshold may have a value between 0.005 and 0.1, e.g. a value of 0.01.

In other examples, the one or more predetermined conditions for the measure(s) of self-occlusion may comprise a condition that the number of second predefined pairs for which the measure of self-occlusion exceeds the predetermined self-occlusion threshold is greater than a predefined minimum number of second predefined pairs, and/or a condition that the measure of self-occlusion exceeds the predetermined self-occlusion threshold for all second predefined pairs in a subset of second predefined pairs. In these examples, in cases in which the one or more predetermined conditions are satisfied for an instance, any 2D key point belonging to a second predetermined pair for which the measure of self-occlusion does not exceed the predetermined self-occlusion threshold may be excluded from the subset of detected 2D key points used for 3D key point estimation (while the remaining 2D key points of the instance may be included in the subset, providing that the one or more predetermined conditions for any other measure of occlusion for the instance are satisfied).

Where the one or more predetermined conditions for the measure(s) of self-occlusion comprise a condition that the number of second predefined pairs for which the measure of self-occlusion exceeds the predetermined self-occlusion threshold is greater than a predefined minimum number of second predefined pairs, the predefined minimum number of second predefined pairs will depend on the total number of first predefined pairs (and optionally on the type of object to which the instances belong). For instance, the predefined minimum number may be defined such that all 2D key points of the instance are excluded from the 3D key point estimation if more than one of the second predefined pairs has a measure of self- occlusion that fails to exceed the predetermined self-occlusion threshold.

Where the one or more predetermined conditions for the measure(s) of self-occlusion comprise a condition that the measure of self-occlusion exceeds the predetermined self-occlusion threshold for all second predefined pairs in a subset of second predefined pairs, a suitable subset of second predefined pairs will depend on the type of object to which the instances belong, and on the types of 2D key points detected. For example, in the case of a person instance (such as in the example 2D images 200, 400 and 500), the subset of second predefined pairs may consist of the second predefined pairs for the shoulders, elbows and wrists, i.e. {(left shoulder, right shoulder), (left elbow, right elbow), (left wrist, right wrist)}.

Having excluded 2D key points from the 3D key point estimation due to one or more types of occlusion for each image, a subset of the detected 2D key points for use in the 3D key point estimation remains. Typically, especially with a large number of cameras (e.g. 8 or more), the subset will include at least two 2D key points for each type of key point for each object in the scene for which 2D key points have been detected (e.g. in the case of a person, the left shoulder 2D key point for at least two instances of the person, etc.), thus allowing a 3D position of each key point to be estimated using triangulation. However, there may be situations in which this is not the case, particularly in systems with fewer cameras.

In some examples, the processing system 120 may only estimate the 3D position of key points of an object for which at least two 2D key points for each type of key point are included in the subset. Alternatively, the processing system may be configured, in response to a determination that the subset does not include at least two 2D key points for each type of key point for each object, to iteratively adjust the one or more predetermined conditions for at least one measure of occlusion until the subset of detected 2D key points includes at least two 2D key points for each type of key point for each object. Since relaxing one or more of the predetermined conditions for inclusion in the subset increases a likelihood of including erroneous 2D key points in the subset, in some examples, the amount by which the predetermined condition(s) may be adjusted may be limited (i.e. once a limit is reached, the processing system may stop iteratively adjusting the predetermined condition(s)).

As previously stated, the processing system 120 is configured to process the subset of the detected 2D key points to estimate a plurality of 3D key points for the scene. The plurality of 3D key points may be determined by identifying corresponding instances between different images of the plurality of 2D images 115. For each pair of corresponding instances, pairs of matching 2D key points may be defined, each pair of matching 2D key points having a first 2D key point belonging to a first corresponding instance of the pair and a second 2D key point belonging to a second corresponding instance of the pair and having the same semantic meaning as the first 2D key point. For instance, for a plurality of 2D images including the 2D image 200 and the 2D image 400, the instance 210a and the instance 210b could be identified as corresponding instances (had the instance 210b not been excluded due to frustum occlusion). The left eye of the instance 210a and the left eye of the instance 210b would then be identified as a pair of matching 2D key points; the right eye of the instance 210a and the eight eye of the instance 210b would be identified as a pair of matching 2D key points; and so on.

In some examples, corresponding instances between different images of the plurality of 2D images may be identified by, for each instance included in the subset of detected 2D key points, generating an epipolar line, for each 2D key point belonging to the instance that is included in the subset, in one or more other images (i.e. different images to the image containing the instance). In each image in which the epipolar lines for the instance are generated, an instance for which the 2D key points have a shortest average distance to the epipolar lines may be identified as a corresponding instance. In some examples, only instances for which 2D key points are included in the subset may be considered when determining which instance has 2D key points with the shortest average distance to the epipolar lines.

In some examples, epipolar lines for each instance in each image may be generated in each other image of the plurality of 2D images 115. In other examples, epipolar lines for each instance in an image may be generated in only a subset of the other images. For instance, epipolar lines for each instance in an image may be generated only in images acquired by adjacent cameras to the camera that acquired the image containing the instance, or only in images acquired by cameras within a predetermined distance of the camera that acquired the image containing the instance.

Fig. 6 illustrates an example of how this identification of corresponding instances may be performed. Fig. 6 shows the 2D image 200, with epipolar lines for the instance 230c of the 2D image 500 generated in the 2D image 200. An epipolar line is generated for each of the 17 2D key points belonging to the instance 230c.

Assuming, for the sake of illustrating the identification of corresponding images, that all instances 210a, 220a and 230a are included in the subset of detected 2D key points (rather than excluding the 2D key points belonging to instances 220a and 230a due to mutual instance occlusion), the instance 230a would be identified as the instance for which the 2D key points have the shortest distance to the epipolar lines for instance 230c, and thus as the corresponding instance for the instance 230c. Pairs of matching key points between the 2D key points of the instance 230a and the 2D key points of the instance 230c would then be defined.

The generation of epipolar lines for each instance included in the subset of detected 2D key points may be performed in images for which corresponding instances have already been identified. For instance, having generated epipolar lines for the instance 230c of the 2D image 500 and identified the instance 230a as the corresponding instance in the 2D image 200, epipolar lines for the instance 230a of the 2D image 200 may be generated in the 2D image 500, and a corresponding instance for the instance 230a may be identified in the 2D image 500. This may improve a robustness of the identification of corresponding instances.

In cases where this process results in identifying different pairs of corresponding instances (e.g. if an instance other than 230c was identified as the corresponding instance for the instance 230a based on the average distance to the epipolar lines for the instance 230a in the 2D image 500), pairs of matching 2D key points for these pairs of corresponding instances may be excluded from the pairs of matching 2D key points used to estimate the plurality of 3D key points. Alternatively, one or more other methods for identifying corresponding instances may be used to determine which pair of corresponding instances is used in the 3D key point estimation, or the pairs matching 2D key points for both pairs of corresponding instances may be used (as errors in the identification of corresponding instances may be accounted during the 3D key point estimation).

The generation of epipolar lines is commonly used in 3D imaging techniques, and suitable methods for generating the epipolar lines for an instance in one or more other instances will be readily apparent to the skilled person.

In some examples, pairs of matching 2D key points may be defined only for corresponding instances for which the average distance to the epipolar lines fails to exceed a predetermined average distance threshold. This reduces a likelihood of misidentifying corresponding instances, and in particular, reduces cases in which a corresponding instance is identified in an image where the "real" corresponding instance has been excluded from the subset of 2D key points due to occlusion.

Suitable values for the predetermined average distance threshold will be apparent to the skilled person. In some examples, the predetermined average distance threshold may be defined relative to the size of the instance (e.g. relative to a radius of a circle representation of the instance). For instance, the predetermined average distance threshold may have a value of between 0.005 and 0.05 of the size of the instance, e.g. 0.01 of the size of the instance.

In some examples, the average distance to the epipolar lines may be used in combination with one or more other techniques for identifying corresponding instances, such as techniques based on identifying correspondences between colors at the positions of 2D key points of a same type. For example, instead of simply identifying the instance for which the average distance to the epipolar lines as the corresponding instances, any instances for which the average distance fails to exceed the predetermined average distance threshold may be identified. If more than one instance has an average distance that fails to exceed the predetermined average distance threshold, one or more other techniques may be applied to these instances to determine which instance is to be identified as the corresponding instance.

For instance, a histogram of colors of a predefined number of pixels may be determined for each key point of each instance having an average distance that fails to exceed the predetermined average distance threshold. A difference measure may be determined between each histogram and a corresponding histogram for the corresponding key point of the instance for which the epipolar lines were generated, and an average difference measure (i.e. over all key points of the instance) may be determined for each of the instances having an average distance that fails to exceed the predetermined average distance threshold, in order to determine which instance is to be identified as the corresponding instance.

As previously stated, one or more of these methods may additionally or alternatively be used to determine which pair of corresponding instances to use for 3D key point estimation if different pairs of corresponding instances are identified when generating epipolar lines in a first image based on an instance in a second image, compared with generating epipolar lines in the second image based on an instance in the first image. For instance, if the pairs of matching 2D key points have matching colors in a first pair of corresponding instances and do not have matching colors in a second pair of corresponding instances, the first pair of corresponding instances may be used in the 3D key point estimation (and not the second pair).

Having defined the pairs of matching 2D key points, the processing system 120 may be configured to process the pairs of matching 2D key points to estimate the plurality of 3D key points.

In some examples, each 3D key point may be estimated by processing each pair of matching 2D key points corresponding to the 3D key point (i.e. 2D key points having a same semantic meaning and belonging to a cluster of mutually corresponding instances, i.e. a group of instances identified as belonging to the same object in the scene) to determine an initial estimate of the position of the 3D key point for each of the pairs of matching 2D key points. For instance, the matching 2D key points belonging to a pair may be triangulated to determine the initial estimate of the 3D position for the pair.

Having determined the initial estimates of the position of a 3D key point, the initial estimates may then be processed to determine a final estimate of the position of the 3D key point. The position of the final estimate may be an average position of the positions of the initial estimates, thus reducing the effect of any errors in the identification of corresponding instances. For instance, the final estimate of the position of a 3D key point k may have the median x-, y- and z- coordinates of the N initial estimates:

$$x_{\text{final}} = \text{median}\big(x_{k,1}, \cdots, x_{k,N}\big)$$

$$y_{\text{final}} = \text{median}\big(y_{k,1}, \cdots, y_{k,N}\big) \qquad\qquad (6)$$

$$z_{\text{final}} = \text{median}\big(z_{k,1}, \cdots, z_{k,N}\big)$$

Alternatively, the final estimate of the position of a 3D key point may have the mean x-, y- and z- coordinates of the initial estimates.

In some examples, having determined the final estimate of the position of each 3D key point, each final estimate may be further refined by processing the final estimate to minimize the sum of distances to multiple epipolar lines corresponding to the 3D key point after projection.

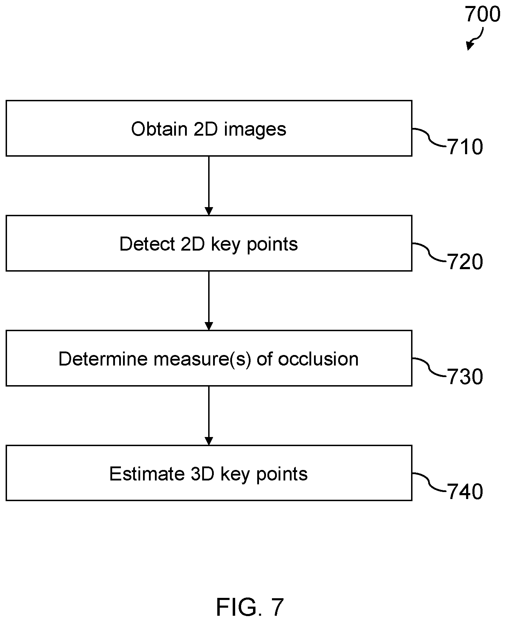

Fig. 7 illustrates a method 700 for 3D key point reconstruction, according to an embodiment of the invention.

The method 700 begins at step 710, at which a plurality of 2D images of a scene are acquired. Each 2D image of the plurality of 2D images is acquired by a different camera.

At step 720, a plurality of 2D key points for each instance of one or more objects in the scene are detected in each 2D image.

At step 730, the detected 2D key points are processed to determine at least one measure of occlusion for each instance in each image.

At step 740, a subset of the detected 2D key points is processed to estimate a plurality of 3D key points for the scene. The subset of detected 2D key points excludes 2D key points belonging to an instance for which any determined measure of occlusion fails to satisfy at least one predetermined condition for the respective measure of occlusion.

Any method described herein may be computer-implemented, where computer-implemented means that the steps of said methods are performed by one or more computers and where a computer is defined as a device suitable for processing data. A computer may be suitable for processing data according to prescribed instructions.

It will be understood that, as the disclosed methods may be computer-implemented methods, there is also proposed a concept of a computer program product comprising code means for implementing any described method when said program is run on a processing system.

The skilled person would be readily capable of developing a processor for carrying out any herein described method. Thus, each step of a flow chart may represent a different action performed by a processor and may be performed by a respective module of the processing processor.

One or more steps of any of the methods described herein may be performed by one or more processors. A processor comprises an electronic circuit suitable for processing data.

As discussed above, the system makes use of processor to perform the data processing. The processor can be implemented in numerous ways, with software and/or hardware, to perform the various functions required. The processor typically employs one or more microprocessors that may be programmed using software (e.g., microcode) to perform the required functions. The processor may be implemented as a combination of dedicated hardware to perform some functions and one or more programmed microprocessors and associated circuitry to perform other functions.

Examples of circuitry that may be employed in various embodiments of the present disclosure include, but are not limited to, conventional microprocessors, application specific integrated circuits (ASICs), and field-programmable gate arrays (FPGAs).

In various implementations, the processor may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor.

A single processor or other unit may fulfill the functions of several items recited in the claims.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

Functions implemented by a processor may be implemented by a single processor or by multiple separate processing units which may together be considered to constitute a "processor". Such processing units may in some cases be remote from each other and communicate with each other in a wired or wireless manner.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa.

Any reference signs in the claims should not be construed as limiting the scope.

**Claims**

1. A method (700) for 3D key point reconstruction, the method comprising:

   obtaining a plurality of 2D images (115, 200, 400, 500) of a scene, each 2D image having been acquired by a different camera (110);
   detecting, in each 2D image, a plurality of 2D key points for each instance (210a, 220a, 230a, 210b, 220b, 230b, 210c, 220c, 230c) of one or more objects in the scene;
   processing the detected 2D key points to determine at least one measure of occlusion for each instance in each image; and
   processing a subset of the detected 2D key points to estimate a plurality of 3D key points for the scene, wherein the subset of detected 2D key points excludes 2D key points belonging to an instance for which any determined measure of occlusion fails to satisfy at least one predetermined condition for the respective measure of occlusion.

2. The method (700) of claim 1, wherein the at least one measure of occlusion for each instance (210a, 220a, 230a, 210b, 220b, 230b, 210c, 220c, 230c) in each image (115, 200, 400, 500) includes a measure of frustum occlusion.

3. The method (700) of claim 2, wherein determining the measure of frustum occlusion for each instance (210a, 220a, 230a, 210b, 220b, 230b, 210c, 220c, 230c) in each image (115, 200, 400, 500) comprises:

   processing the detected 2D key points belonging to the instance to determine a shape representation for the instance; and
   determining the measure of frustum occlusion for the instance based on the shape representation for the instance.

4. The method (700) of any of claims 1 to 3, wherein the at least one measure of occlusion for each instance (210a, 220a, 230a, 210b, 220b, 230b, 210c, 220c, 230c) in each image (115, 200, 400, 500) includes, for each other instance in the same image, a measure of mutual instance occlusion between the instance and the other instance.

5. The method (700) of claim 4, wherein determining each measure of mutual instance occlusion between the instance (210a, 220a, 230a, 210b, 220b, 230b, 210c, 220c, 230c) and another instance comprises:

> processing the detected 2D key points belonging to the instance to determine a shape representation for the instance;
> processing the detected 2D key points belonging to the other instance to determine a shape representation for the other instance; and
> determining the measure of mutual instance occlusion between the instance and the other instance based on the shape representation for the image and the shape representation for the other instance.

6. The method (700) of any of claims 1 to 5, wherein the at least one measure of occlusion for each instance (210a, 220a, 230a, 210b, 220b, 230b, 210c, 220c, 230c) in each image (115, 200, 400, 500) includes at least one measure of mutual instance key point occlusion.

7. The method (700) of claim 6, wherein the at least one measure of mutual instance key point occlusion for each instance (210a, 220a, 230a, 210b, 220b, 230b, 210c, 220c, 230c) in each image (115, 200, 400, 500) comprises a measure of distance between 2D key points for at least one first predefined pair, wherein each first predefined pair comprises a 2D key point of the instance and a 2D key point of another instance in the image.

8. The method (700) of claim 7, wherein, in response to the at least one predetermined condition for the at least one measure of mutual instance key point occlusion for an instance being satisfied, the subset of detected 2D key points excludes any 2D key point belonging to the instance for which the measure of distance for a first predefined pair containing the 2D key point fails to exceed a predetermined key point threshold.

9. The method (700) of any of claims 1 to 8, wherein the at least one measure of occlusion for each instance (210a, 220a, 230a, 210b, 220b, 230b, 210c, 220c, 230c) in each image (115, 200, 400, 500) includes at least one measure of self-occlusion.

10. The method (700) of claim 9, wherein the at least one measure of self-occlusion for each instance (210a, 220a, 230a, 210b, 220b, 230b, 210c, 220c, 230c) in each image (115, 200, 400, 500) comprises a measure of distance between 2D key points for at least one second predefined pair, wherein each second predefined pair comprises a pair of 2D key points of the instance.

11. The method (700) of any of claims 1 to 10, wherein the step of processing the subset of the detected 2D key points to estimate the plurality of 3D key points comprises:

> for each instance included in the subset of detected 2D key points:

>> generating, in each of one or more other images, an epipolar line for each 2D key point belonging to the instance;
>> identifying, as a corresponding instance in each of the one or more other images, an instance for which the 2D key points have a shortest average distance to the epipolar lines; and
>> for at least one corresponding instance, defining pairs of matching 2D key points between the 2D key points of the instance and the 2D key points of the corresponding instance; and

> processing the pairs of matching 2D key points to estimate the plurality of 3D key points.

12. The method (700) of claim 11, wherein pairs of matching 2D key points are defined only for corresponding instances for which the average distance to the epipolar lines fails to exceed a predetermined average distance threshold.

13. The method (700) of claim 11 or 12, wherein the step of processing the pairs of matching 2D key points to estimate the plurality of 3D key points comprises, for each 3D key point:

> processing each pair of matching 2D key points corresponding to the 3D key point to obtain an initial estimate of the position of the 3D key point; and

processing the initial estimates of the position of the 3D key point to determine a final estimate of the position of the 3D key point.

14. A computer program product comprising computer program code means which, when executed on a computing device having a processing system, cause the processing system to perform all of the steps of the method (700) according to any of claims 1 to 13.

15. A processing system (120) for 3D key point reconstruction, the processing system being configured to:

obtain a plurality of 2D images (115, 200, 400, 500) of a scene, each 2D image having been acquired by a different camera (110);
detect, in each 2D image, a plurality of 2D key points for each instance (210a, 220a, 230a, 210b, 220b, 230b, 210c, 220c, 230c) of one or more objects in the scene;
process the detected 2D key points to determine at least one measure of occlusion for each instance in each image; and
process a subset of the detected 2D key points to estimate a plurality of 3D key points for the scene, wherein the subset of detected 2D key points excludes 2D key points belonging to an instance for which any determined measure of occlusion fails to satisfy at least one predetermined condition for the respective measure of occlusion.

FIG. 1

FIG. 2

200

FIG. 3

400

FIG. 4

500

FIG. 5

200

FIG. 6

700

```
┌─────────────────────────────────────┐
│         Obtain 2D images            │──────710
└─────────────────────────────────────┘
                    │
                    ▼
┌─────────────────────────────────────┐
│        Detect 2D key points         │──────720
└─────────────────────────────────────┘
                    │
                    ▼
┌─────────────────────────────────────┐
│    Determine measure(s) of occlusion │──────730
└─────────────────────────────────────┘
                    │
                    ▼
┌─────────────────────────────────────┐
│        Estimate 3D key points       │──────740
└─────────────────────────────────────┘
```

FIG. 7

Europäisches
Patentamt
European
Patent Office
Office européen
des brevets

# EUROPEAN SEARCH REPORT

**Application Number**

EP 23 21 2685

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 111 798 486 B (UNIV ZHEJIANG) 17 May 2022 (2022-05-17) | 1-10,14, 15 | INV. G06T7/70 |
| Y | * the whole document * * figures 1-4 * * summary * * claims 1,2,7 * * paragraphs [0041] - [0043] * | 11-13 | G06T7/593 G06T7/73 G06T17/00 G06F18/211 |
| X | WO 2022/241583 A1 (UNIV ELECTRONIC SCI & TECH CHINA [CN]) 24 November 2022 (2022-11-24) | 1,14,15 | ADD. G06T13/40 |
| Y | * the whole document * * figures 1-4 * * summary * * claims 1,7 * * steps 1-7 * | 11-13 | |
| Y | CN 114 627 491 A (ZHEJIANG INDUSTRIAL AND COMMERCIAL UNIV) 14 June 2022 (2022-06-14) * the whole document * * claim 1 * | 11-13 | |

**TECHNICAL FIELDS SEARCHED (IPC)**

G06F
G06V
G06T

The present search report has been drawn up for all claims

| Place of search | Date of completion of the search | Examiner |
|---|---|---|
| The Hague | 22 April 2024 | Thollot, Julien |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 21 2685**

This annex lists the patent family members relating to the patent documents cited in  the above-mentioned European search report.
The members are as contained in the European Patent Office EDP file on
The European Patent Office is in no way liable for these particulars which are merely given for the purpose of information.

**22-04-2024**

| Patent document cited in search report | | Publication date | Patent family member(s) | Publication date |
|---|---|---|---|---|
| CN 111798486 | B | 17-05-2022 | NONE | |
| WO 2022241583 | A1 | 24-11-2022 | NONE | |
| CN 114627491 | A | 14-06-2022 | NONE | |

EPO FORM P0459

For more details about this annex : see Official Journal of the European Patent Office, No. 12/82